# EUROPÄISCHE PATENTSCHRIFT

(11) **EP 0 637 604 B1**
(45) Veröffentlichungstag und Bekanntmachung des Hinweises auf die Patenterteilung: **09.09.1998**
(21) Anmeldenummer: 94111610.5
(22) Anmeldetag: 26.07.1994
(51) Int. Cl.: C08J 9/00, C08L 23/10, C08J 9/10

(54) **Kunststofformteil und Verfahren zum Herstellen desselben**
Plastic moulding and preparation process
Article en matière plastique et son procédé de préparation

(30) Priorität: 05.08.1993 DE 4326326
(43) Veröffentlichungstag der Anmeldung: 08.02.1995
(73) Patentinhaber: BECKER GROUP EUROPE GmbH, 42285 Wuppertal (DE)
(72) Erfinder: Petrakis, Jordanis, D-51399 Burscheid (DE); Leenaerts, Torsten, D-42285 Wuppertal (DE); Hoge, Wolfgang, D-42399 Wuppertal (DE)

(56) Entgegenhaltungen:
- EP-A- 0 545 181
- US-A- 4 677 133
- DATABASE WPI Section Ch, Week 8224, Derwent Publications Ltd., London, GB; AN 82-48939E & JP-A-57 073 034 (MITSUBISHI PETROCH. K. K.) 7 May 1982
- DATABASE WPI Week 8814, Derwent Publications Ltd., London, GB; AN 88-96417 & JP-A-63 048 352 (SUMITOMO CHEMICAL IND. K. K.) 1 March 1988

## Beschreibung

Die Erfindung bezieht sich auf ein Kunststofformteil mit moosgummiähnlichen Eigenschaften sowie auf ein Verfahren zum Herstellen eines solchen Kunststofformteils.

Ein bekanntes Kunststofformteil, das als Dichtungsprofil ausgebildet ist, besteht aus einem metallischen Trägerprofil mit einer PVC-Ummantelung. An die PVC-Ummantelung ist ein Moosgummiprofil angeklebt. Obgleich derartige Profile seit vielen Jahren eingesetzt werden, sind sie nicht von Nachteilen frei und vermögen den heutigen technischen Anforderungen auch nicht mehr zu genügen. Als nachteilig bei den bekannten Profilen wird angesehen, daß PVC und Moosgummi nicht coextrudierbar sind, was den Einsatz einer separaten Extrusionslinie für die Herstellung des Trägerprofils und den separaten Einsatz einer Extrusionslinie für das Moosgummiprofil mit entsprechender Kostenbelastung bedeutet. Nachteilig ist ferner der für die Verbindung der separaten Profile zu betreibende Aufwand, der sehr zeit-und kostenaufwendig und dennoch nicht unbedingt zuverlässig ist. Ein weiterer Nachteil der herkömmlichen Profile besteht darin, daß durch den Einsatz von Gummi keine Farbgestaltung möglich ist. Schließlich sind die bekannten Profile aufgrund der verwendeten unterschiedlichen Werkstoffe und Klebstoffe nicht recyclebar, was als besonders gravierend erachtet wird, denn die heutigen Bestrebungen sind auf eine Wiederverwertung von Werkstoffen ausgerichtet.

In der US-A- 4 677 133 ist ein Dichtungsmaterial beschrieben, das aus einem geschäumten thermoplastischen Elastomer besteht, wobei als Ausgangsmaterial einerseits ein thermoplastisches, vernetzbares Elastomer wie EPDM und ein weiteres thermoplastisches Elastomer wie PEBBS verwendet werden, dem ggf. als dritte Komponente amorphes Polypropylen zugemischt werden kann. Mit diesem Material soll eine Dichtungsmasse hergestellt werden, das in einen klebrigen, kittartigen Zustand verbleibt und mit einem Zusatz eines Hautbildners versehen ist, damit die mit dem erwähnten Material hergestellten Gegenstände keine klebrige Haut aufweisen.

Der Erfindung liegt hiernach die Aufgabe zugrunde, ein Kunststofformteil mit moosgummiartigen Eigenschaften zur Verfügung zu stellen und ein Verfahren zu dessen Herstellung aufzuzeigen mit dem die angegebenen Nachteile vermieden werden.

Gegenständlich wird diese Aufgabe dadurch gelöst, daß für das Kunststoffformteil aus geschäumten thermoplastischen Elastomeren als thermoplastische Elastomere TE(EPDM-X+PP) [PP EPDM-Elastomerlegierung mit dynamisch (in-situ) vernetztem Elastomeranteil] und TE(PEBBS+PP) [Styrol-Ethylen/Butylen-Styrol-Triblockcopolymer / PP-Blend] eingesetzt werden, wobei es sich als besonders günstig erwiesen hat, etwa vier Anteile TE(EPDM-X+PP) Shore Härte (A) 40 und einen Anteil TE(PEBBS+PP) Shore Härte (A) 30 oder etwa drei Anteile TE(EPDM-X-PP) Shore Härte (A) 60 und zwei Anteile TE(PEBBS+PP) Shore Härte (A) 30 vorzusehen.

Das erfindungsgemäße Formteil ist frei von Chlor, umweltverträglich und frei von gesundheitsgefährdenden Stoffen. Die neue, erfindungsgemäße Werkstoffzusammensetzung gewährleistet zudem eine volle Recyclbarkeit. Das neue, erfindungsgemäße Formteil kann mit einer Shore Härte (A) von etwa 25 bis 85 und einer Shore Härte (D) von etwa 30 bis 45 zur Verfügung gestellt werden und bereitet keine herstellungstechnischen Schwierigkeiten. Ein weiterer Vorteil besteht in der hohen Licht-, UV- und Ozon-Beständigkeit sowie in einem guten Druckverformungsrest auch in der Wärme bei 70 bis 100° C.

Das Kunststofformteil kann bei geringfügigerem Anforderungsprofil auch aus TE(EPDM-X+PP) und TE(PBBS+PP) [Styrol-Butadien-Styrol-Triblockcopolymer / PP-Blend] bestehen.

Die der Erfindung zugrundeliegende Aufgabe kann auch durch ein Kunststofformteil gelöst werden, das aus geschäumten thermoplastischen Elastomeren (TPE's) und geschäumten thermoplastischen Polyolefinen (TPE-O) besteht. Dabei kommen Materialzusammensetzungen wie TE(EPDM-X+PP) und TE(PEBBS+PP) und TE(EPDM+PP) oder TE(EPDM-X-PP), TE(PBBS+PP) und TE(EPDM+PP) bevorzugt zum Einsatz.

Ein Kunststofformteil, bestehend aus etwa vier Teilen TE(EPDM-X+PP) Shore Härte (A) 80, einem Teil TE(PEBBS+PP) (oder TE(PBBS+PP) Shore Härte (A) 40 und drei Teilen TE(EPDM+PP) Shore Härte (D) 35, hat sich in praktischen Testreihen als besonders vorteilhaft erwiesen.

In dem erfindungsgemäßen Kunststofformteil sind chemische Treibmittel eingelagert, wie darin auch Farbpigmente eingelagert sein können.

Das erfindungsgemäße Kunststofformteil ist in einer bevorzugten Ausführungsform als extrudierte Profilleiste ausgebildet. Die Profilleiste kann dabei wenigstens einen relativ hart und wenigstens einen realtiv weich eingestellten Bereich aufweisen, wobei der wenigstens eine relativ harte mit dem wenigstens einen relativ weichen Bereich einstückig durch Coextrusion verbunden ist. Der wenigstens eine relativ weiche Bereich der Profilleiste kann mit Vorteil als Dichtung in Form einer Dichtungslippe oder eines Dichtungschlauchs ausgebildet sein.

Eine andere bevorzugte Ausführungsform der Erfindung sieht vor, das Kunststofformteil als Spritzgußteil auszubilden. Auch hier ist eine Verbindung durch Anspritzen weich an hart oder hart an weich realisierbar.

Das Verfahren zum Herstellen eines Kunststofformteils sieht erfindungsgemäß vor, daß eine Mischung, bestehend aus TE(EPDM-X+PP) und gegebenenfalls TE(EPDM+PP) - Komponenten, TE(PEBBS+PP) -Komponenten oder TE(PBBS+PP)-Komponenten und chemischen Treibmitteln aufgeschäumt wird. Der Teibmittelanteil sollte zwischen 0,5 und 2,5 % liegen.

Die erfindungsgemäß verwendete Materialzusammensetzung hat die Herstellung von Kunststofformteilen mit gummiähnlichen Eigenschaften durch Extrusion und Spritzguß ermöglicht, und zwar in einwandfreier Qualität, was als überraschend angesehen werden muß. Versuche, die mit einer TPE-Komponente plus chemischer Treibmittel oder mit einer TPO-Komponente plus chemischer Treibmittel durchgeführt wurden, führten nämlich zu völlig unbrauchbaren Ergebnissen. Es zeigten sich u.a. folgende Fehler: Inhomogene Schaumstrukturen, unkontrolliertes Aufquellen der Extrudate, Aufreißen der Oberflächen, ungenügender Schäumgrad, sehr geringe Extrusionsgeschwindigkeiten, Versprödung des Extrudats, deutliche Verschlechterung der mechanischen Werte, Reduzierung der Reißfestigkeit und Dehnung, rauhe und abgegraute Oberflächen, Zerbröseln der Extrudate bei Werkzeugaustritt sowie Bildung von Blasen und Pickeln auf der Oberfläche.

Zur Lösung der eingangs formulierten Aufgabe eignet sich auch ein Verfahren, bei dem erfindungsgemäß vorgesehen ist, daß eine Mischung, bestehend aus TE(EPDM-X-PP)-Komponenten, TE(PEBBS+PP)-Komponenten und chemischen Treibmitteln aufgeschäumt wird.

Schließlich besteht ein bevorzugtes Verfahren zum Herstellen eines Kunststofformteils erfindungsgemäß darin, daß Polymermassen aus TE(EPDM-X-PP)-, TE(PEBBS+PP)- oder TE(PBBS+PP)- und ggf. TE(EPDM+PP)-Komponenten und chemische Treibmittel aufgeschäumt werden, nachdem diese compoundiert wurden, und zwar bei einer Temperatur unterhalb der Starttemperatur der Treibmittel. Auf diese Weise wird eine besonders große Werkstoffhomogenität erzielt.

Das erfindungsgemäße Verfahren läßt sich durch den Zusatz von Farbpigmenten ausgestalten, wie auch dadurch, daß die Mischungen oder Compounds zu Profilleisten extrudiert oder zu Formteilen spritzgegossen werden.

Durch die erfindungsgemäßen Maßnahmen lassen sich extrudierte und/oder gespritzte Formteile aus geschäumten TPE-O/TPE-Blends für den Innen-und Außenbereich (hier ist insbesondere an Fahrzeuge gedacht) zur Verfügung stellen bzw. in hervorragender Qualität bei geringen Fertigungskosten herstellen. Die besondere Art und Zusammensetzung der TPO/TPE-Schaumblends ermöglicht auch die Anwendung in Kombination mit nicht geschäumten Materialien durch Coextrusion, Anspritzung und Verpressung, und zwar in den Shorebereichen 25 A - 45 D und Raumgewichten zwischen 0,5 und 0,9 g/cm³. Des weiteren eröffnen die erfindungsgemäßen Maßnahmen Farbgebungsmöglichkeiten, eine geschlossene glatte Oberfläche und moosgummiähnliche Eigenschaften im Shorebereich A. Insbesondere sind die Blendvarianten chlorfrei, umweltverträglich und ohne Einschränkung recyclebar.

Durch die erfindungsgemäße Abmischung verträglicher TPE-O/TPE's und die Zugabe spezieller Treibmittel auf chemischer Basis (Beispiel: exotherme und/oder endotherme Treibmittel z.B. auf Basis mod. Azodicarbonamide) ist es gelungen ein Blend zu erzeugen, das die folgenden Eigenschaften und Verarbeitungsmöglichkeiten erfüllt:
- PVC (Chlor) - frei
- Umweltverträglich
- Frei von gesundheitsgefährdenden Stoffen
- Recyclebar zu gleichwertigen Artikeln
- Shore Härte (A) 25 - 85
- Shore Härte (D) 30 - 45
- Extrudierbar mit glatter und geschlossener Oberfläche
- Chemische Eigenschaften vergleichbar mit Gummimischungen
- Mechanische und phys. Eigenschaften entsprechend Vorgaben
- Extrudierbar und spritzgießbar
- Endanspritzfähig
- Extrudierbar als Schaumkörper
- Extrudierbar auf herkömmlichen Anlagen und Werkzeugen
- Coextrudierbar an TPO/TPE
- Homogene Schaumstruktur (feinporig)
- Raumgewicht 0,5 bis 0,9 g/cm³

Beispiel 1 zur Herstellung einer Profilleiste mit gummiähnlichen Eigenschaften.

80 Teile TE(EPDM-X+PP) (Granulat), Shore-Härte (A) 40, 20 Teile TE(PEBBS+PP) (Granulat), Shore-Härte (A) 30 und 2 Teile chemischer Treibmittel werden ggf. unter Zusatz von Farbpigmenten miteinander vermischt (oder compoundiert), einem Extruder zugeführt und bei einer Betriebstemperatur von 170 bis 210° C extrudiert.

Resultat: Feine Poren, gleichmäßige Verteilung, geschlossene Oberfläche, seidenmatt, Shore A = 25 geschäumt.

Beispiel 2 zur Herstellung eines Spritzlings mit moosgummiähnlichen Eigenschaften.

60 Teile TE(EPDM-X+PP) (Granulat) Shore-Härte (A) 60, 40 Teile TE(PEBBS +PP) (Granulat) Shore-Härte (A) 30 und 0,5 bis 2,5 % chemischer Treibmittelzusatz werden miteinander vermischt und bei einer Betriebstemperatur von 190 bis 240° C zu einem Formteil gespritzt.

Resultat: Feine Poren, gleichmäßige Verteilung, geschlossene Oberfläche, gute Haptik, Shore A = 30 geschäumt.

Bevortzugterweise weist das Kunststofformteil eine geschlossene und glatte Oberfläche bei einer feinporigen und homogenen Schaumstruktur auf.

In weiterer Ausgestaltung der Erfindung kann bei der Herstellung von extrudierten Formteilen vorgesehen sein, daß durch innerhalb oder außerhalb des Extrusionswerkzeugs ggf. auch ohne Werkzeugberührung angeordnete Schneideelemente ein beliebiger Schnitt der Schmelze in Fließrichtung erfolgt. Auf diese Weise können in einem Fertigungsgang zwei oder mehr extrudierte Kunststofformteile mit an den Schnittflächen geschlossenen und glatten Formteiloberflächen gebildet werden.

Gemäß einer anderen Weiterbildung der Erfindung kann das Kunststoffformteil durch Abformung einer textilen Formoberfläche am Formteil eine kratz- und reibunempfindliche Oberfläche mit einem textilartigen Charakter erhalten.

Die vorstehend im einzelnen verwendeten Bezeichnungen sind entnommen dem veröffentlichten Referat "Nomenklatur und Prüfverfahren" von Dipl.-Ing. Ekkehard Gorski, München (vgl. Fachtagung 06. und 07. Oktober 1992, Mainfrankensäle, Veitshöcheim, Seiten 25 bis 29 gemäß Anlage).

## Patentansprüche

1. Kunststofformteil mit moosgummiähnlichen Eigenschaften aus geschäumten thermoplastischen Elastomeren, dadurch gekennzeichnet, daß dasselbe aus PP/EPDM-Elastomerlegierung mit dynamisch vernetztem Elastomeranteil, abgekürzt TE(EPDM-X+PP) und Styrol-Ethylen/ Butylen-Styrol-Triblockcopolymer/PP-Blend, abgekürzt TE(PEBBS+PP) besteht.

2. Kunststofformteil nach Anspruch 1, dadurch gekennzeichnet, daß dasselbe etwa vier Anteile TE(EPDM-X+PP) Shore Härte (A) 40 und einen Anteil TE(PEBBS+PP) Shore Härte (A) 30 oder etwa drei Anteile TE(EPDM-X+PP) Shore Härte (A) 60 und zwei Anteile TE(PEBES+PP) Shore Härte (A) 30 aufweist.

3. Kunststofformteil mit moosgummiähnlichen Eigenschaften aus geschäumten thermoplastischen Elastomeren, dadurch gekennzeichnet, daß dasselbe aus TE(EPDM-X+PP), wie im Anspruch 1 definiert und Styrol-Butadien-Styrol-Triblockcopolymer/PP-Blend, abgekürzt TE(PBBS+PP) besteht.

4. Kunststofformteil mit moosgummiähnlichen Eigenschaften aus geschäumten thermoplastischen Elastomeren, dadurch gekennzeichnet, daß dasselbe aus TE(EPDM-X+PP) und TE(PEBBS+PP), beide wie im Anspruch 1 definiert sowie aus thermoplastischen Polyolefinen (TPE-O's) wie EPDM/PP-Blend, abgekürzt TE(EPDM+PP) besteht.

5. Kunststofformteil mit moosgummiähnlichen Eigenschaften aus geschäumten thermoplastischen Elastomeren, dadurch gekennzeichnet, daß dasselbe aus thermoplastischen Elastomeren, nämlich TE(EPDM-X+PP), wie im Anspruch 1 definiert und TE(PBBS+PP), wie im Anspruch 3 definiert sowie aus thermoplastischen Polyolefinen (TPE-0's) wie TE(EPDM+PP), wie im Anspruch 4 definiert besteht.

6. Kunststofformteil nach Anspruch 4 oder 5, dadurch gekennzeichnet, daß dasselbe etwa vier Anteile TE(EPDM-X+PP) Shore Härte (A) 80, einen Anteil TE(PEBBS+PP) [oder TE(PBBS+PP) Shore Härte (A) 40] und drei Anteile TPE-O Shore Härte (D) 35 aufweist.

7. Kunststofformteil nach einem der Ansprüche 1 bis 6, dadurch gekennzeichnet, daß in demselben chemische Treibmittel eingelagert sind.

8. Kunststofformteil nach einem der Ansprüche 1 bis 7, dadurch gekennzeichnet, daß in demselben Farbpigmente eingelagert sind.

9. Kunststofformteil nach einem der Ansprüche 1 bis 8, dadurch gekennzeichnet, daß dasselbe als extrudierte Profilleiste ausgebildet ist.

10. Kunststofformteil nach Anspruch 9, dadurch gekennzeichnet, daß die Profilleiste wenigstens einen relativ hart und wenigstens einen relativ weich eingestellten Bereich aufweist und daß der wenigstens eine relativ harte mit dem wenigstens einen relativ weichen Bereich einstückig durch Coextrusion verbunden ist.

11. Kunststofformteil nach Anspruch 9 oder 10, dadurch gekennzeichnet, daß der wenigstens eine relativ weiche Bereich der Profilleiste als Dichtung in Form einer Dichtungslippe oder eines Dichtungsschlauchs ausgebildet ist.

12. Kunststofformteil nach einem der Ansprüche 1 bis 8, dadurch gekennzeichnet, daß dasselbe als Spritzgußteil ausgebildet ist.

13. Verfahren zum Herstellen eines Kunststofformteils nach wenigstens einem der Ansprüche 1 bis 12, dadurch gekennzeichnet, daß eine Mischung, bestehend aus TE(EPDM-X+PP)-Komponenten, TE(PEBBS+PP)-Komponenten oder TE(PBBS+PP)-Komponenten und chemischen Treibmitteln aufgeschäumt wird.

14. Verfahren zum Herstellen eines Kunststofformteils nach wenigstens einem der Ansprüche 1 bis 12, dadurch gekennzeichnet, daß eine Mischung, bestehend aus TE(EPDM-X+PP)-Komponenten, TE(PEBBS+PP)-Komponenten oder TE(PBBS+PP)-Komponenten, TE(EPDM+PP)-Komponenten und chemischen Treibmitteln aufgeschäumt wird.

15. Verfahren zum Herstellen eines Kunststoffmaterials nach wenigtens einem der Ansprüche 1 bis 12, dadurch gekennzeichnet, daß Polymermassen aus TE(EPDM-X-PP)-, TE(PEBBS+PP)- oder TE(PBBS+PP)- und ggf. TE(EPDM+PP)-Komponenten und chemischen Treibmittel aufgeschäumt werden, nachdem diese compoundiert wurden, und zwar bei einer Temperatur unterhalb der Starttemperatur der Treibmittel (kleiner 180°C).

16. Verfahren nach einem der Ansprüche 13 bis 15, gekennzeichnet durch den Zusatz von Farbpigmenten.

17. Verfahren nach einem der Ansprüche 13 bis 16, dadurch gekennzeichnet, daß die Mischungen oder Compounds zu Profilleisten extrudiert oder zu Formteilen spritzgegossen werden.

18. Kunststofformteil nach einem der Ansprüche 1 bis 12, dadurch gekennzeichnet, daß dasselbe eine geschlossene und glatte Oberfläche bei einer feinporigen und homogenen Schaumstruktur aufweist.

19. Verfahren nach einem der Ansprüche,13 bis 17, dadurch gekennzeichnet, daß bei der Herstellung extrudierter Formteile vorgesehen ist, daß durch innerhalb oder außerhalb des Extrusionswerkzeugs ggf. auch ohne Werkzeugberührung ein beliebiger Schnitt der Schmelze in Fließrichtung erfolgt.

20. Verfahren nach wenigstens einem der Ansprüche 13 bis 17, dadurch gekennzeichnet, daß die Kunststofformteiloberfläche durch Abformung einer textilen Formoberfläche eine kratz- und reibunempfindliche Oberfläche mit einem textilen Charakter erhält.

## Claims

1. Plastic moulding with foam-rubber-like properties made from foamed thermoplastic elastomers, characterized in that it is composed of a PP/EPDM elastomer blend with a dynamically crosslinked elastomer fraction, abbreviated to TE(EPDM-X+PP) and a styrene-ethylene/butylene-styrene triblock copolymer/PP blend, abbreviated to TE(PEBBS+PP).

2. Plastic moulding according to Claim 1, characterized in that it has about four parts of TE(EPDM-X+PP) of Shore A hardness 40 and one part of TE(PEBBS+PP) of Shore A hardness 30, or about three parts of TE(EPDM-X+PP) of Shore A hardness 60 and two parts of TE(PEBBS+PP) Shore A hardness 30.

3. Plastic moulding with foam-rubber-like properties made from foamed thermoplastic elastomers, characterized in that it is composed of TE(EPDM-X+PP), as defined in Claim 1, and styrene-butadiene-styrene triblock copolymer/PP blend, abbreviated to TE(PBBS+PP).

4. Plastic moulding with foam-rubber-like properties made from foamed thermoplastic elastomers, characterized in that it is composed of TE(EPDM-X+PP) and TE(PEBBS+PP), in both cases as defined in Claim 1, and also of thermoplastic polyolefins (TPE-O's) such as EPDM/PP blend, abbreviated to TE(EPDM+PP).

5. Plastic moulding with foam-rubber-like properties made from foamed thermoplastic elastomers, characterized in that it is composed of thermoplastic elastomers, specifically TE(EPDM-X+PP), as defined in Claim 1, and TE(PBBS+PP), as defined in Claim 3, and also of thermoplastic polyolefins (TPE-O's) such as TE(EPDM+PP), as defined in Claim 4.

6. Plastic moulding according to Claim 4 or 5, characterized in that it has about four parts of TE(EPDM-X+PP) of Shore A hardness 80, one part of TE(PEBBS+PP) [or TE(PBBS+PP) of Shore A hardness 40] and three parts of TPE-O of Shore D hardness 35.

7. Plastic moulding according one of Claims 1 to 6, characterized in that chemical blowing agents are incorporated within the same.

8. Plastic moulding according to one of Claims 1 to 7, characterized in that colour pigments are incorporated in the same.

9. Plastic moulding according to one of Claims 1 to 8, characterized in that it is in the shape of a linear extruded profile.

10. Plastic moulding according to Claim 9, characterized in that the linear profile is provided with at least one relatively hard and at least one relatively soft region, and in that the at least one relatively hard region is integrally bonded with the at least one relatively soft region by coextrusion.

11. Plastic moulding according to Claim 9 or 10, characterized in that the at least one relatively soft region of the linear profile is formed as a gasket in the shape of a sealing lip or sealing tube.

12. Plastic moulding according to one of Claims 1 to 8, characterized in that it is formed as an injection moulding.

13. Process for producing a plastic moulding according to at least one of Claims 1 to 12, characterized in that a mixture composed of TE(EPDM-X+PP) components, TE(PEBBS+PP) components or TE(PBBS+PP) components and chemical blowing agents is foamed.

14. Process for producing a plastic moulding according to at least one of Claims 1 to 12, characterized in that a mixture composed of TE(EPDM-X+PP) components, TE(PEBBS+PP) components or TE(PBBS+PP) components, TE(EPDM+PP) components and chemical blowing agents is foamed.

15. Process for producing a plastic moulding according to at least one of Claims 1 to 12, characterized in that polymer compositions made from TE(EPDM-X+PP) components, TE(PEBBS+PP) components or TE(PBBS+PP) components and, if desired, TE(EPDM+PP) components and chemical blowing agents are foamed, after they have been compounded, and specifically at a temperature below the temperature at which the blowing agent begins to take effect (below 180°C).

16. Process according to one of Claims 13 to 15, characterized in that colour pigments are added.

17. Process according to one of Claims 13 to 16, characterized in that the mixtures or compounds are extruded to give linear profiles or injection moulded to give mouldings.

18. Plastic moulding according to one of Claims 1 to 12, characterized in that it has a sealed and smooth surface and a fine-pored and homogeneous foam structure.

19. Process according to one of Claims 13 to 17, characterized in that it is intended that, during production of extruded mouldings, the melt is cut in any desired manner in the direction of flow by cutting units arranged within or outside the extrusion tool or else, if desired, arranged with no contact with the extrusion tool.

20. Process according to at least one of Claims 13 to 17, characterized in that, by means of a moulding process, the surface of the plastic moulding is given a surface which has textile character and is resistant to scratching and the effects of friction.

## Revendications

1. Pièce moulée en matière plastique aux propriétés similaires à celles de caoutchouc cellulaire, à base d'élastomères thermoplastiques en mousse, caractérisée en ce qu'elle consiste en un alliage élastomérique PP/EPDM à fraction élastomérique réticulée dynamiquement, en abrégé TE(EPDM-X+PP), et en un mélange copolymère tribloc styrène-éthylène/butylène-styrène / PP, en abrégé TE(PEBBS+PP).

2. Pièce moulée en matière plastique selon la revendication 1, caractérisée en ce qu'elle comprend environ quatre parties de TE(EPDM-X+PP) de dureté Shore (A) 40 et une partie de TE(PEBBS+PP) de dureté Shore (A) 30, ou bien environ trois parties de TE(EPDM-X+PP) de dureté Shore (A) 60 et deux parties de TE(PEBBS+PP) de dureté Shore (A) 30.

3. Pièce moulée en matière plastique aux propriétés similaires à celles de caoutchouc cellulaire, à base d'élastomères thermoplastiques en mousse, caractérisée en ce qu'elle consiste en TE(EPDM-X+PP) tel que défini à la revendication 1, et en un mélange copolymère tribloc styrène-butadiène-styrène / PP, en abrégé TE(PBBS+PP).

4. Pièce moulée en matière plastique aux propriétés similaires à celles de caoutchouc cellulaire, à base d'élastomères thermoplastiques en mousse, caractérisée en ce qu'elle consiste en TE(EPDM-X+PP) et en TE(PEBBS+PP), tous deux tels que définis dans la revendication 1, ainsi qu'en polyoléfines thermoplastiques (TPE-O) telles qu'un mélange EPDM/PP, en abrégé TE(EPDM+PP).

5. Pièce moulée en matière plastique aux propriétés ysimilaires à celles de caoutchouc cellulaire, à base d'élastomères thermoplastiques en mousse, caractérisée en ce qu'elle consiste en élastomères thermoplastiques, à savoir TE(EPDM-X+PP) tel que défini dans la revendication 1, et en TE(PBBS+PP) tel que défini dans la revendication 3, ainsi qu'en polyoléfines thermoplastiques (TPE-O) telles que TE(EPDM+PP), comme défini dans la revendication 4.

6. Pièce moulée en matière plastique selon la revendication 4 ou 5, caractérisée en ce qu'elle comprend environ quatre parties de TE(EPDM-X+PP) de dureté Shore (A) 80, une partie de TE(PEBBS+PP) [ou TE(PBBS+PP) de dureté Shore (A) 40] et trois parties de TPE-O de dureté Shore (D) 35.

7. Pièce moulée en matière plastique selon l'une quelconque des revendications 1 à 6, caractérisée en ce que des agents moussants chimiques y sont incorporés.

8. Pièce moulée en matière plastique selon l'une quelconque des revendications 1 à 7, caractérisée en ce que des pigments colorés y sont incorporés.

9. Pièce moulée en matière plastique selon l'une quelconque des revendications 1 à 8, caractérisée en ce qu'elle est conçue comme un profilé extrudé.

10. Pièce moulée en matière plastique selon la revendication 9, caractérisée en ce que le profilé comporte au moins une zone relativement dure et au moins une zone relativement souple, et en ce qu'au moins une zone relativement dure est liée par coextrusion à au moins une zone relativement souple.

11. Pièce moulée en matière plastique selon la revendication 9 ou 10, caractérisée en ce qu'au moins une zone relativement souple du profilé est conçue en tant qu'élément d'étanchéité, sous la forme d'une lèvre d'étanchéité ou d'un tube d'étanchéité.

12. Pièce moulée en matière plastique selon l'une quelconque des revendications 1 à 8, caractérisée en ce qu'elle est conçue en tant que pièce injectée.

13. Procédé pour la fabrication d'une pièce moulée en matière plastique selon au moins l'une quelconque des revendications 1 à 12, caractérisé en ce qu'on fait mousser un mélange consistant en composants TE(EPDM-X+PP), en composants TE(PEBBS+PP) ou en composants TE(PBBS+PP) et en agents moussants chimiques.

14. Procédé pour la fabrication d'une pièce moulée en matière plastique selon au moins l'une quelconque des revendications 1 à 12, caractérisé en ce qu'on fait mousser un mélange consistant en composants TE(EPDM-X+PP), en composants TE(PEBBS+PP) ou en composants TE(PBBS+PP), en composants TE(EPDM+PP) et en agents moussants chimiques.

15. Procédé pour la fabrication d'une pièce moulée en matière plastique selon au moins l'une quelconque des revendications 1 à 12, caractérisé en ce qu'on fait mousser des compositions polymériques de composants TE(EPDM-X+PP), TE(PEBBS+PP) ou TE(PBBS+PP) et éventuellement de composants TE(EPDM+PP), ainsi que d'agents moussants chimiques, après que ceux-ci aient été compoundés à une température inférieure à la température de démarrage des agents moussants (inférieure à 180°C).

16. Procédé selon l'une quelconque des revendications 13 à 15, caractérisé par l'ajout de pigments colorés.

17. Procédé selon l'une quelconque des revendications 13 à 16, caractérisé en ce que les mélanges ou compounds sont extrudés en profilés ou injectés en pièces moulées.

18. Pièce moulée en matière plastique selon l'une des revendications 1 à 12, caractérisée en ce qu'elle présente une surface fermée et lisse ainsi qu'une structure de mousse à micropores homogène.

19. Procédé selon l'une quelconque des revendications 13 à 17, caractérisé en ce que lors de la fabrication de pièces extrudées, il est prévu d'effectuer une coupe quelconque de la matière en fusion, dans le sens de l'écoulement, à l'intérieur ou à l'extérieur de l'outil d'extrusion, le cas échéant sans mouvement de l'outil.

20. Procédé selon au moins l'une quelconque des revendications 13 à 17, caractérisé en ce que la surface de la pièce moulée en matière plastique reçoit, par déformation d'une surface textile de moulage, une surface résistante aux griffes et aux frottements, au caractère textile.
